Europäisches Patentamt

European Patent Office

Office européen des brevets

(19)

(11) **EP 1 163 736 B1**

(12) **EUROPÄISCHE PATENTSCHRIFT**

(45) Veröffentlichungstag und Bekanntmachung des Hinweises auf die Patenterteilung:
**21.07.2004 Patentblatt 2004/30**

(21) Anmeldenummer: **00920361.3**

(22) Anmeldetag: **01.03.2000**

(51) Int Cl.$^7$: **H04B 7/005**

(86) Internationale Anmeldenummer:
**PCT/DE2000/000635**

(87) Internationale Veröffentlichungsnummer:
**WO 2000/059129 (05.10.2000 Gazette 2000/40)**

(54) **VERFAHREN ZUR REGELUNG DER SENDELEISTUNG IN EINEM MOBILFUNKSYSTEM UND ENTSPRECHENDES MOBILFUNKSYSTEM**

METHOD OF CONTROLLING THE TRANSMITTING POWER OF A MOBILE RADIO TELEPHONE SYSTEM AND CORRESPONDING MOBILE RADIO SYSTEM

PROCEDE DE REGULATION DE LA PUISSANCE D'EMISSION DANS UN SYSTEME DE TELEPHONIE MOBILE ET SYSTEME CORRESPONDANT

(84) Benannte Vertragsstaaten:
**DE FR GB**

(30) Priorität: **25.03.1999 DE 19913629**

(43) Veröffentlichungstag der Anmeldung:
**19.12.2001 Patentblatt 2001/51**

(73) Patentinhaber: **SIEMENS AKTIENGESELLSCHAFT**
**80333 München (DE)**

(72) Erfinder: **RAAF, Bernhard**
**D-81475 München (DE)**

(56) Entgegenhaltungen:
**EP-A- 0 854 588        US-A- 5 469 471**
**US-A- 5 564 075**

**Beschreibung**

Die vorliegende Erfindung betrifft ein Verfahren zur Regelung der Sendeleistung in einem Mobilfunksystem sowie ein entsprechendes Mobilfunksystem.

Die Regelung der Sendeleistung stellt bei Mobilfunksystemen ein wichtiges Leistungsmerkmal dar, um mögliche Interferenzen zwischen den einzelnen Verbindungen unterbinden und somit die Kapazität und Qualität der Verbindungen verbessern zu können und um die mittlere Sendeleistung reduzieren und bestmöglich an die Bedürfnisse anpassen sowie Verluste über die Übertragungskanäle wenigstens teilweise ausregeln zu können.

Zu diesem Zweck wird in dem Mobilfunksystem empfangsseitig das von einem Sender übertragene Signal ausgewertet, um davon abhängig Informationen für die Leistungsregelung erzeugen und an den Sender übermitteln zu können, der daraufhin die Sendeleistung entsprechend den Leistungsregelungsinformationen einstellt.

Dabei kann von dem Empfänger der Empfangspegel und/oder die Empfangsqualität des Sendesignals gemessen und als Istwerte an den Sender übermittelt werden, der in Abhängigkeit von diesen Istwerten die Sendeleistung entsprechend nachregelt. Dieser Ansatz wird beispielsweise in GSM-Mobilfunksystemen (Global System for Mobile Communications) angewendet. Alternativ kann der Empfänger auch selbst abhängig von dem gemessenen Empfangspegel des Sendesignals Sollwerte bzw. Einstellbefehle für die Sendeleistung erzeugen und an den Sender übertragen, der daraufhin die Sendeleistung entsprechend einstellt. Dieser Ansatz wird beispielsweise bei CDMA-Mobilfunksystemen (Code Division Multiple Access) eingesetzt und ist insbesondere gemäß dem derzeitigen Stand der UMTS-Normgebung (Universal Mobile Telecommunication System) für UMTS-Mobilfunksysteme vorgesehen, die gemäß einem WCDMA-Verfahren (Wideband Code Division Multiple Access) betrieben werden sollen. Bei jedem Ansatz wird die Leistung des Senders stets so geregelt, daß unter Berücksichtigung der aktuellen Eigenschaften des Übertragungskanals beim Empfänger trotz Fading-Effekte möglichst genau die jeweils benötigte Leistung ankommt.

Der Sender kann jedoch nur mit einer gewissen Verzögerung auf die Messungen des Empfängers und die ihm nachfolgend zugeführten Leistungsinformationen reagieren, was insbesondere bei höheren Geschwindigkeiten des Empfängers zu einer Verschlechterung (Degradation) des

Übertragungsverhaltens des Mobilfunksystems führt.

Ein Verfahren zur Leistungsregelung in einem Mobilfunksystem ist aus EP-A-0 854 588 bekannt.

Um dieses Problem zu lösen, wurde für CDMA-Mobilfunksysteme vorgeschlagen, durch eine möglichst hohe Leistungsregelungsfrequenz und eine geschickte Verschachtelung der Zeitschlitze der Uplink- und Downlink-Verbindungen eine möglichst kurze Reaktionszeit oder Verzögerung bei der Leistungsregelung zu erreichen. Insbesondere ist gemäß diesem Vorschlag vorgesehen, die Rahmenstruktur der Uplink-Verbindung, d.h. der Verbindung zwischen der Mobilstation und der Basisstation, gegenüber der Rahmenstruktur der Downlink-Verbindung, d.h. der Verbindung zwischen der Basisstation und der Mobilstation, um 250 μs zu verschieben, um eine Leistungsregelung der Sendeleistung mit einer zeitlichen Verzögerung von lediglich einem Zeitschlitz zu ermöglichen, wenn die Symbol-Übertragungsrate der Downlink-Verbindung höher als 16 ksps ist. Dieser Vorschlag ist beispielsweise in ARIB, Volume 3, Specification of Air-Interface for 3G Mobile System, Vers. 0.5, Abschnitt 3.2.2.1 beschrieben.

Die oben beschriebene Vorgehensweise geht allerdings zu Lasten einer genauen Messung der Kanalimpulsantwort des entsprechenden Übertragungskanals, was jedoch für die Beurteilung des Verhaltens und des Zustands des Übertragungskanals unerläßlich ist, da durch bestimmte Betriebsbedingungen Signalverzerrungen auftreten können, die im äußersten Fall eine Informationsübertragung unmöglich machen. In Mobilfunksystemen wird daher im Empfänger die aktuelle Kanalimpulsantwort gemessen, um anschließend gegebenenfalls festgestellte Signalverzerrungen mit Hilfe entsprechender Entzerrer oder Equalizer korrigieren zu können.

Aus diesem Grunde liegt der vorliegenden Erfindung die Aufgabe zugrunde, ein verbessertes Verfahren zur Regelung der Sendeleistung in einem Mobilfunksystem sowie ein entsprechendes Mobilfunksystem zu schaffen, womit der Einfluß von Verzögerungen bei der Leistungsregelung möglichst vollständig eliminiert werden kann.

Diese Aufgabe wird erfindungsgemäß durch ein Verfahren mit den Merkmalen des Anspruches 1 bzw. ein entsprechendes Mobilfunksystem mit den Merkmalen des Anspruches 11 gelöst. Die Unteransprüche beschreiben jeweils bevorzugte und vorteilhafte Ausführungsformen der vorliegenden Erfindung.

Erfindungsgemäß wird vorgeschlagen, das Verhalten des Übertragungskanals und davon abhängig die benötigte Sendeleistung abzuschätzen, so daß die an den Sender zu übertragene Leistungsregelungsinformation auf Grundlage der abgeschätzten benötigten Sendeleistung erzeugt werden kann.

Insbesondere wird das zeitliche Verhalten oder der Zustand des jeweiligen Übertragungskanals vorhergesagt, so daß die in Zukunft benötigte Sendeleistung davon abhängig abgeschätzt werden kann. Die Leistungsregelungsinformation, welche die Grundlage für die sendeseitige Einstellung der Sendeleistung darstellt, beruht dann im Gegensatz zu dem bekannten Stand der Technik nicht auf dem augenblicklichen-gemessenen Wert des Empfangspegels oder der Empfangsqualität des Sendesignals, sondern auf der zuvor beschriebenen Vorhersage (Prädiktion) des Kanalzustands und der künftig benötigten Sendeleistung. Auf diese Weise kann der Einfluß von Verzögerungen bei der Leistungsregelung der Sendeleistung eliminiert werden, falls das Verhalten des Übertragungskanals hinreichend genau vorhergesagt werden kann.

Das Verhalten des Kanalzustands kann beispielsweise über die Kanalimpulsantwort abgeschätzt werden.

Die Erfindung kann mit anderen Verfahren zur Bestimmung der Leistungsregelungsinformation kombiniert werden, wobei mit zunehmender Geschwindigkeit des Empfängers bzw. der Mobilstation der Anteil des Verfahrens der vorliegenden Erfindung bei der Bestimmung der an den Sender zu übertragenden Leistungsregelungsinformation reduziert oder ganz ausgeschaltet wird, da mit zunehmenden Geschwindigkeiten genaue Schätzungen immer schwieriger werden.

Die Erfindung wird nachfolgend näher unter Bezugnahme auf die beigefügte Zeichnung erläutert. Dabei zeigt

Fig. 1 eine schematische Darstellung zur Erläuterung des der vorliegenden Erfindung zugrundeliegenden Prinzips,

Fig. 2 eine schematische Darstellung eines Mobilfunksystems zur Erläuterung der Informationsübertragung bei der Leistungsregelung, und

Fig. 3 die Rahmen- und Zeitschlitzstruktur für eine sogenannte Downlink-Verbindung gemäß dem derzeitigen Stand der UMTS-Normgebung.

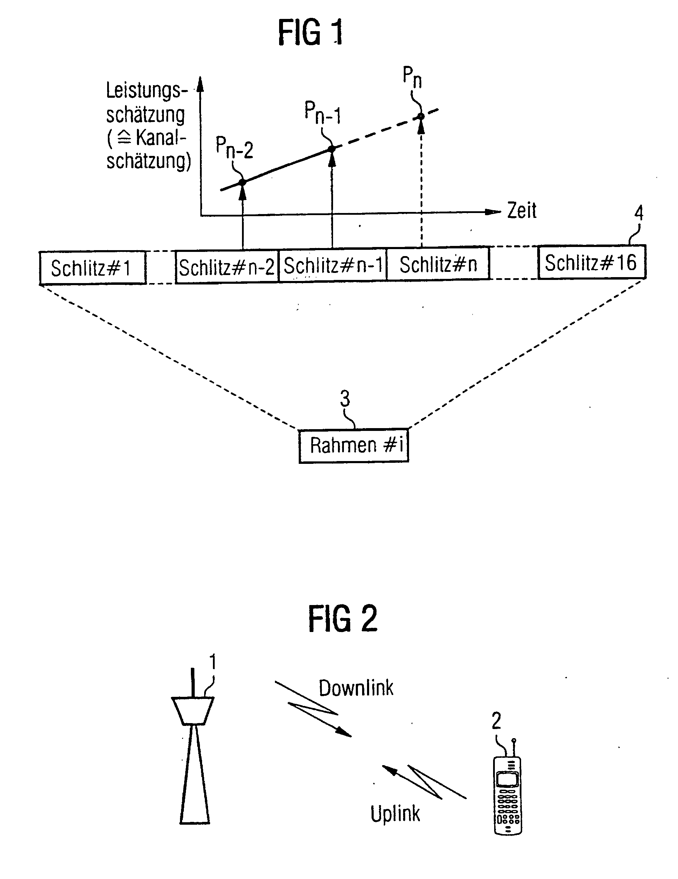

In Fig. 2 ist die Kommunikation zwischen einer Basisstation 1 und einer Mobilstation 2 eines Mobilfunksystems dargestellt. Eine Verbindung von der Basisstation 1 zum Mobilteil 2 wird als Downlink- oder Forward Link-Verbindung bezeichnet, während eine Verbindung von dem Mobilteil 2 zu der Basisstation 1 als Uplink- oder Reverse Link-Verbindung bezeichnet wird. Zur Leistungsregelung des Downlinks wird in der Mobilstation 2 das jeweilige Empfangssignal ausgewertet und davon abhängig eine Leistungsregelungsinformation erzeugt und an die Basisstation 1 zurückgesendet, so daß die Basisstation 1 die Sendeleistung entsprechend einstellen kann. Für die Regelung des Uplinks wird das Empfangssignal in der Basisstation 1 ausgewertet und dort die Leistungsregelungsinformation erzeugt und die Mobilstation 2 zur Leistungsanpassung angewiesen.

Die Übertragung der Leistungsinformation erfolgt dabei abhängig von dem jeweiligen Mobilfunksystem eingebunden in eine vorgegebene Rahmenstruktur.

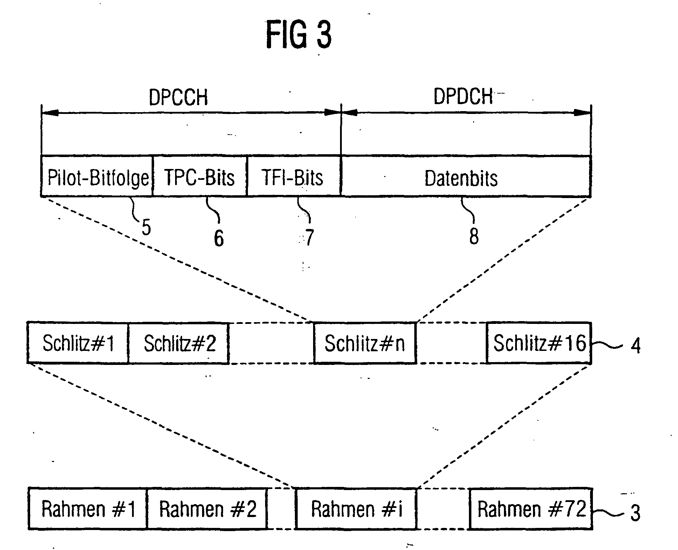

In Fig. 3 ist die Rahmen- und Zeitschlitzstruktur für eine Downlink-Verbindung über einen auch als DPCH (Dedicated Physical Channel) bezeichneten UMTS-Mobilfunkkanal dargestellt, wobei die vorliegende Erfindung bevorzugt auf entsprechende UMTS-Mobilfunksysteme angewendet wird. Die Rahmenstruktur mit einer Dauer von 720 ms umfaßt insbesondere 72 identisch aufgebaute Rahmen 3 mit einer Rahmendauer von 10 ms, wobei jeder Rahmen wiederum jeweils 16 Zeitschlitze 4 mit einer Zeitschlitzdauer von 0,625 ms aufweist. Jeder Zeitschlitz 4 umfaßt Bitinformationen, welche auf einen logischen Steuerkanal (DPCCH, Dedicated Physical Control Channel) und einen logischen Datenkanal (DPDCH, Dedicated Physical Data Channel) aufgeteilt sind. Die Bits des DPCCH-Abschnitts umfassen eine Pilot-Bitfolge 5 sowie sogenannte TPC-Steuerbits (Transmitter Power Control) 6 und TFI-Steuerbits (Transmitter Format Identifier) 7. Der DPDCH-Abschnitt umfaßt Nutzdatenbits 8. Die in Fig. 3 gezeigte Struktur kann beispielsweise dem Dokument ETSI STC SMG2 UMTS-L1: Tdoc SMG2 UMTS-L1 221/98 entnommen werden.

Die Pilot-Bitfolge 5 dient zur bereits oben erwähnten Schätzung der Kanalimpulsantwort während einer sogenannten Trainingssequenz und entspricht einem bekannten Bitmuster. Wird die Pilot-Bitfolge mit s (t), die Kanalimpulsantwort mit h(t) und das Empfangssignal bzw. die Trainingssequenz mit r(t) bezeichnet, so gilt:

$$r\,(t) = s\,(t) * h(t).$$

Durch Vergleich des Empfangssignals r(t) mit der bekannten Pilot-Bitfolge s(t) kann somit der Empfänger die Kanalimpulsantwort h(t) des Mobilfunkkanals ermitteln bzw. schätzen, wobei zu diesem Zweck beispielsweise signalangepaßte Filter (Matched Filter) zur Anwendung kommen, welche die Kanalimpulsantwort h (t) durch Berechnung der Korrelation zwischen dem Empfangssignal r(t) und der Pilot-Bitfolge s(t) berechnen.

Die TPC-Bits 6 umfassen die Leistungsregelungsinformation, wobei bei UMTS-Mobilfunksystemen im Empfänger das Empfangssignal ausgewertet und mit vorgegebenen Qualitätsanforderungen bzw. Referenzwerten verglichen wird. Abhängig von diesem Vergleich wird von dem Empfänger ein Regelbefehl erzeugt und in Form des TPC-Bitfelds 6 an den Sender übertragen, um diesen zur entsprechenden Anpassung der Sendeleistung anzuweisen.

Nachfolgend wird das der vorliegenden Erfindung zugrundeliegende Prinzip unter Bezugnahme auf Fig. 1 erläutert.

Das zeitliche Verhalten bzw. der Zustand des Übertragungskanals wird vorhergesagt, um davon abhängig die in Zukunft benötigte Sendeleistung abschätzen zu können. Die Beurteilung des Verhaltens des Übertragungskanals kann dabei insbesondere über die Kanalimpulsantwort erfolgen.

Bei der Darstellung von Fig. 1 sei angenommen, daß augenblicklich die Sendeleistung für den Zeitschlitz n ermittelt werden soll, um einen entsprechenden Leistungsregelungsbefehl an den Sender senden zu können. Die für die Zeitschlitze n-2 und n-1 anhand der in den jeweiligen Zeitschlitzen übermittelten Pilot-Bitfolgen 5 gemessenen Werte der Kanalimpulsantworten sowie die für diese Zeitschlitze ermittelten Werte $P_{n-2}$ bzw. $P_{n-1}$ für die Sendeleistung sind im Empfänger bekannt, so daß der Empfänger auf Grundlage dieser bekannten Werte den zukünftigen Kanalzustand bzw. die in Zukunft für den Zeitschlitz n benötigte Sendeleistung $P_n$ extrapolieren kann, was in Fig. 1 durch eine gestrichelte Linie angedeutet ist. Dieser extrapolierte Leistungswert $P_n$ wird von dem Empfänger anschließend für die Regelung der Sendeleistung verwendet, d.h. der an den Sender zu übertragenden Leistungsregelungsinformation 6 zugrundegelegt.

Es wird somit der Verlauf des schnellen Fadings so weit wie möglich vorhergesagt, wobei in der Regel Rayleigh-Fading angenommen wird. Bei Verwendung von sogenannten Rake-Empfangern wird die Prädiktion für jeden Rake-Finger durchgeführt. In Rake-Empfängern wird das Empfangssignal in mehreren Pfade, den sogenannten Rake-Fingern, verarbeitet. Jeder dieser Rake-Finger wird mit optimierter Phasenlage auf ein Mehrwegesignal eingestellt, um somit bei Vorliegen von Mehrwegesignalen, die mit unterschiedlicher Laufzeitverzögerung an der Empfangsantenne eintreffen, eine Gewinnsteigerung zu erzielen. Tiefe Fading-Löcher oder Fading-Einbrüche treten immer dann auf, wenn die Kanalimpulsantwort bei allen oder zumindest den dominanten Pfaden einen (annähernden) Nulldurchgang aufweist. Dieser Umstand kann zuverlässig vorhergesagt werden, wenn sowohl die Abstände der Schätzung der Kanalimpulsantwort als auch der Vorhersagezeitraum kleiner als die sogenannte Kohärenzzeit des Übertragungskanals gewählt werden, um eine vernünftige Datendetektion zu ermöglichen. Zumindest kleinen bis mittleren Geschwindigkeiten der Mobilstation 2 ist der Vorhersagezeitraum kleiner als die Kohärenzzeit des Übertragungskanals.

Wie in Fig. 1 gezeigt ist, kann die für die Vergangenheit gemessene Kanalimpulsantwort zur Prädiktion der zukünftig benötigten Sendeleistung linear extrapoliert werden. Selbstverständlich sind jedoch auch anderer Ansätze denkbar.

Bei hohen Geschwindigkeiten der Mobilstation 2 kann eine genaue und zuverlässige Prädiktion des zukünftigen Verhaltens des Übertragungskanals bzw. der zukünftig benötigten Sendeleistung schwierig sein. Daher ist gemäß einem Ausführungsbeispiel der Erfindung vorgesehen, bei der Ermittlung der Leistungsregelungsinformation 6 das erfindungsgemäße Prinzip mit weiteren Prinzipien, mit deren Hilfe die Leistungsregelungsinformation ermittelt werden kann, zu kombinieren, wobei in Abhängigkeit vom charakteristischen Verhalten des Übertragungskanals, z.B. bei höheren Geschwindigkeiten der Mobilstation 2, der Anteil der erfindungsgemäßen Prädiktion an der Ermittlung der Leistungsregelungsinformation reduziert öder ganz ausgeschaltet werden kann.

So kann beispielsweise das erfindungsgemäße Verfahren nur in einem bestimmten, nicht zu hohen Geschwindigkeitsbereich der Mobilstation 2 angewendet werden, während ansonsten die Leistungsregelungsinformation 6 herkömmlich anhand des augenblicklich gemessenen Pegels des Empfangssignals bestimmt wird, da das herkömmliche nicht-prädiktive Leistungsregelungsverfahren beispielsweise bei niedrigen Geschwindigkeiten der Mobilstation 2 durchaus für eine zufriedenstellende Regelung der Sendeleistung ausreichend ist.

Besonders vorteilhaft ist jedoch, wenn zwischen der Erfindung und dem weiteren Verfahren zur Bestimmung der Leistungsregelungsinformation nicht "hart", sondern "weich" umgeschaltet wird. So kann als Sollwert für die Sendeleistung in einem bestimmten Geschwindigkeitsbereich beispielsweise ein Wert verwendet werden, der sich zu 70% aus dem aktuelle gemessenen Wert der Empfangsleistung und zu 30% aus dem erfindungsgemäß vorhergesagten Wert zusammensetzt, d.h. der Sollwert für die Sendeleistung beruht auf einer Gewichtung von verschiedenen Werten, die auf unterschiedliche Art und Weise ermittelt worden sind, wobei einer dieser Werte erfindungsgemäß bestimmt worden ist. In diesem Fall kann gesagt werden, daß die Empfangsleistung und die daraus abgeleitete Soll-Sendeleistung nicht um einen Zeitschlitz 4 im voraus berechnet werden, sondern um einen Bruchteil a eines Zeitschlitzes, wobei a einen Korrekturfaktor darstellt und die Verläßlichkeit der Prädiktion widerspiegelt. Der Korrekturfaktor a kann dabei Werte zwischen 0 und 1 annehmen und beträgt bei dem zuvor beschriebenen Beispiel 0,3.

Bei der obigen Beschreibung wurde davon ausgegangen, daß das Verhalten bzw. der Zustand des Übertragungskanals durch Schätzung der Kanalimpulsantwort vorausgesagt wird. Es ist jedoch ebenso möglich, statt dessen-auch den sogenannten Gleichkanalstörabstand C/I vorherzusagen, um daraus die in der Zukunft benötigte Sendeleistung abzuleiten. Ebenso kann auch nur die (dem Trägersignal entsprechende) Komponente C oder die (den Interferenzen entsprechende) Komponente vorhergesagt werden, um die künftig benötigte Sendeleistung abzuschätzen.

**Patentansprüche**

1. Verfahren zur Regelung der Sendeleistung in einem Mobilfunksystem,
   wobei ein von einem Empfänger (2) über einen Übertragungskanal des Mobilfunksystems empfangenes Signal eines Senders (1) ausgewertet und davon abhängig eine Leistungsregelungsinformation (6) erzeugt und an den Sender (1) gesendet wird,

wobei in dem Sender (1) die Sendeleistung in Abhängigkeit von der Leistungsregelungsinformation (6) eingestellt wird,

daß das Verhalten des Übertragungskanals geschätzt wird,

wobei in Abhängigkeit von dem Ergebnis der Schätzung des Verhaltens des Übertragungskanals die benötigte Sendeleistung abgeschätzt wird,

wobei die Leistungsregelungsinformation (6) auf Grundlage der abgeschätzten benötigten Sendeleistung erzeugt und-an den Sender (1) gesendet wird,

**dadurch gekennzeichnet,**

**daß** das Verhalten des Übertragungskanals durch Prädiktion geschätzt wird, und

**daß** die in Zukunft benötigte Sendeleistung in Abhängigkeit von dem Ergebnis der Prädiktion des Verhaltens des Übertragungskanals abgeschätzt wird.

2. Verfahren nach Anspruch 1,
**dadurch gekennzeichnet,**
**daß** das Verhalten des Kanalzustands durch Prädiktion der Kanalimpulsantwort geschätzt wird.

3. Verfahren nach Anspruch 1,
**dadurch gekennzeichnet,**
**daß** das Verhalten des Kanalzustands durch Prädiktion des Gleichkanalstörabstands geschätzt wird.

4. Verfahren nach einem der Ansprüche 1 bis 3,
**dadurch gekennzeichnet,**
**daß** das Verhalten des Übertragungskanals regelmäßig geschätzt wird,
wobei der Abstand zwischen den einzelnen Schätzungen und der Zeitraum, über den das Verhalten des Übertragungskanals vorhergesagt wird, jeweils kleiner als die Kohärenzzeit des Übertragungskanals gewählt werden.

5. Verfahren nach einem der vorhergehenden Ansprüche,
**dadurch gekennzeichnet,**
**daß** der Wert der Leistungsregelungsinformation (6) linear abhängig von dem Ergebnis der Schätzung des Verhaltens des Übertragungskanals eingestellt wird.

6. Verfahren nach einem der vorhergehenden Ansprüche,
**dadurch gekennzeichnet,**
**daß** die Leistungsregelungsinformation (6) in Abhängigkeit von dem geschätzten Verhalten des Übertragungskanals und zudem in Abhängigkeit von dem augenblicklich gemessenen Empfangspegel des von dem Empfänger (2) empfangenen Signals erzeugt wird,
wobei der Anteil des geschätzten Verhaltens des Übertragungskanals an der Erzeugung der Leistungsregelungsinformation (6) in Abhängigkeit vom charakteristischen Verhalten des Übertragungskanals angepaßt wird.

7. Verfahren nach Anspruch 6,
**dadurch gekennzeichnet,**
**daß** der Sender (1) oder Empfänger (2) eine mobile Einheit ist, und
**daß** der Anteil des geschätzten Verhaltens des Übertragungskanals an der Erzeugung der Leistungsregelungsinformation (6) bei höheren Geschwindigkeiten der mobilen Einheit verringert wird.

8. Verfahren nach Anspruch 7,
**dadurch gekennzeichnet,**
**daß** die augenblickliche Geschwindigkeit der mobilen Einheit geschätzt wird, und
**daß** in Abhängigkeit von der geschätzten Geschwindigkeit der mobilen Einheit der Anteil des geschätzten Verhaltens des Übertragungskanals an der Erzeugung der Leistungsregelungsinformation (6) eingestellt wird.

9. Verfahren nach Anspruch 8,
**dadurch gekennzeichnet,**
**daß** die Kanalimpulsantwort des Übertragungskanals gemessen und davon abhängig die Kohärenzzeit des Übertragungskanals abgeschätzt wird, um daraus die augenblickliche Geschwindigkeit der mobilen Einheit abzuleiten.

10. Mobilfunksystem,
mit einem Sender (1), und
mit einem Empfänger (2) zum Empfangen eines über einen Übertragungskanal des Mobilfunksystems übertragenen Signals des Senders (1) und zum Auswerten des empfangenen Signals, um davon abhängig eine Leistungsregelungsinformation (6) zu erzeugen und an den Sender (1) zu senden,
wobei der Sender (1) derart ausgestaltet ist, daß er die Sendeleistung in Abhängigkeit von der Leistungsregelungsinformation des Empfängers (2) einstellt,
wobei der Empfänger (2) derart ausgestaltet ist, daß er abhängig von dem empfangenen Signal das Verhalten des Übertragungskanals schätzt, in Abhängigkeit von dem Ergebnis der Schätzung des Verhaltens des Übertragungskanals die benötigte Sendeleistung ermittelt und die Leistungsregelungsinformation (6) auf Grundlage der ermittelten benötigten Sendeleistung erzeugt und an den Sender (1) sendet,
**dadurch gekennzeichnet,**
**daß** der Empfänger (2) zur Durchführung des Verfahrens nach einem der Ansprüche 1-9 ausgestal-

9 EP 1 163 736 B1 10

tet ist.

**11.** Mobilfunksystem nach Anspruch 10,
**dadurch gekennzeichnet,**
**daß** der Empfänger (2) die Leistungsregelungsinformation (6) in Form eines an den Sender (1) gerichteten Befehls zur Einstellung der Sendeleistung erzeugt.

**12.** Mobilfunksystem nach Anspruch 11,
**dadurch gekennzeichnet,**
**daß** das Mobilfunksystem ein CDMA-Mobilfunksystem ist.

**Claims**

**1.** Method for controlling the transmitting power in a mobile radio system, in which a signal of a transmitter (1), received by a receiver (2) via a transmission channel of the mobile radio system, is evaluated and in dependence thereon a power control information item (6) is generated and transmitted to the transmitter (1), and
in which the transmitting power is adjusted in dependence on the power control information item (6) in the transmitter (1),
in which the behaviour of the transmission channel is estimated,
in which the transmitting power needed is estimated in dependence on the result of the estimation of the behaviour of the transmission channel,
in that the power control information item (6) is generated on the basis of the estimated transmitting power needed and is transmitted to the transmitter (1),
**characterized in that**
the behaviour of the transmission channel is estimated by prediction and **in that** the transmitting power needed in future is estimated in dependence on the result of the prediction of the behaviour of the transmission channel.

**2.** Method according to Claim 1, **characterized in that** the behaviour of the channel state is estimated by predicting the channel impulse response.

**3.** Method according to Claim 1, **characterized in that** the behaviour of the channel state is estimated by predicting the carrier/interferer ratio.

**4.** Method according to one of Claims 1 to 3, **characterized in that** the behaviour of the transmission channel is estimated regularly, the interval between the individual estimates and the period over which the behaviour of the transmission channel is predicted being in each case selected to be shorter than the coherence time of the transmission channel.

**5.** Method according to one of the preceding claims, **characterized in that** the value of the power control information item (6) is adjusted to be linearly dependent on the result of the estimation of the behaviour of the transmission channel.

**6.** Method according to one of the preceding claims, **characterized in that** the power control information item (6) is generated in dependence on the estimated behaviour of the transmission channel and additionally in dependence on the instantaneously measured received level of the signal received by the receiver (2), the proportion of the estimated behaviour of the transmission channel in the generation of the power control information item (6) being adapted in dependence on the characteristic behaviour of the transmission channel.

**7.** Method according to Claim 6, **characterized in that** the transmitter (1) or receiver (2) is a mobile unit and **in that** the proportion of the estimated behaviour of the transmission channel in the generation of the power control information (6) is reduced at higher speeds of the mobile unit.

**8.** Method according to Claim 7, **characterized in that** the instantaneous speed of the mobile unit is estimated and **in that** the proportion of the estimated behaviour of the transmission channel in the generation of the power control information item (6) is adjusted in dependence on the estimated speed of the mobile unit.

**9.** Method according to Claim 8, **characterized in that** the channel impulse response of the transmission channel is measured and in dependence thereon the coherence time of the transmission channel is estimated in order to derive therefrom the instantaneous speed of the mobile unit.

**10.** Mobile radio system comprising a transmitter (1) and a receiver (2) for receiving a signal of the transmitter (1) transmitted via a transmission channel of the mobile radio system and for evaluating the received signal in order to generate in dependence thereon, and to transmit to the transmitter (1), a power control information item (6), the transmitter (1) being constructed in such a manner that it adjusts the transmitting power in dependence on the power control information of the receiver (2), in which the receiver (2) is constructed in such a manner that it estimates the behaviour of the transmission channel in dependence on the received signal, determines the transmitting power needed in dependence on the result of the estimation of the behaviour of the transmission channel and generates, and transmits to the transmitter (1), the power control information item (6) on the basis of the needed transmitting power determined, **characterized in that** the receiver (2) is constructed for performing the method according to one of Claims 1-9.

11. Mobile radio system according to Claim 10, **characterized in that** the receiver (2) generates the power control information item (6) in the form of a command for adjusting the transmitting power directed to the transmitter (1).

12. Mobile radio system according to Claim 11, **characterized in that** the mobile radio system is a CDMA mobile radio system.

## Revendications

1. Procédé pour la régulation de la puissance d'émissiondans un système de téléphonie mobile, un signal, reçu par un récepteur (2) au moyen d'un canal de transmission du système de téléphonie mobile, d'un émetteur (1) étant estimé et une information de régulation de puissance (6) étant générée en fonction de cela et envoyée à l'émetteur (1), la puissance d'émission étant réglée dans l'émetteur (1) en fonction de l'information de régulation de puissance (6), le comportement du canal de transmission étant estimé, la puissance d'émission nécessaire étant estimée en fonction du résultat de l'estimation du comportement du canal de transmission, l'information de régulation de puissance (6) étant générée sur la base de la puissance d'émission nécessaire estimée et envoyée à l'émetteur (1), **caractérisé en ce que** le comportement du canal de transmission est estimé par prédiction, et **en ce que** la puissance d'émission nécessaire dans l'avenir est estimée en fonction du résultat de la prédiction du comportement du canal de transmission.

2. Procédé selon la revendication 1, **caractérisé en ce que** le comportement de l'état du canal est estimé par prédiction de la réponse impulsionnelle de canal.

3. Procédé selon la revendication 1, **caractérisé en ce que** le comportement de l'état du canal est estimé par prédiction du rapport signal/bruit sur le même canal.

4. Procédé selon l'une quelconque des revendications 1 à 3, **caractérisé en ce que** le comportement du canal de transmission est estimé de façon régulière, la distance entre les différentes estimations et l'intervalle de temps, pour lequel le comportement du canal de transmission est prédit, étant choisies respectivement plus petites que le temps de cohérence du canal de transmission.

5. Procédé selon l'une quelconque des revendications précédentes, **caractérisé en ce que** la valeur de l'information de régulation de puissance (6) est réglée de façon linéaire en fonction du résultat de l'estimation du comportement du canal de transmission.

6. Procédé selon l'une quelconque des revendications précédentes, **caractérisé en ce que** l'information de régulation de puissance (6) est générée en fonction du comportement estimé du canal de transmission et en plus en fonction du niveau de réception mesuré instantanément du signal reçu par le récepteur (2), la fraction du comportement estimé du canal de transmission par rapport à la génération de l'information de régulation de puissance (6) étant adaptée en fonction du comportement caractéristique du canal de transmission.

7. Procédé selon la revendication 6, **caractérisé en ce que** l'émetteur (1) ou le récepteur (2) est une unité mobile, et **en ce que** la fraction du comportement estimé du canal de transmission par rapport à la génération de l'information de régulation de puissance (6) est réduite dans le cas de vitesses plus élevées de l'unité mobile.

8. Procédé selon la revendication 7, **caractérisé en ce que** la vitesse instantanée de l'unité mobile est estimée, et **en ce que** la fraction du comportement estimé du canal de transmission par rapport à la génération de l'information de régulation de puissance (6) est réglée en fonction de la vitesse estimée de l'unité mobile.

9. Procédé selon la revendication 8, **caractérisé en ce que** la réponse impulsionnelle du canal de transmission est mesurée et le temps de cohérence du canal de transmission est estimé en fonction de cela, afin d'en déduire la vitesse instantanée de l'unité mobile.

**10.** Système de téléphonie mobile,
comprenant un émetteur (1), et
un récepteur (2) pour la réception d'un signal, transmis au moyen d'un canal de transmission du système de téléphonie mobile, de l'émetteur et pour l'évaluation du signal reçu, afin de générer une information de régulation de puissance (6) en fonction de cela et de l'envoyer à l'émetteur (1),
l'émetteur (1) étant conçu de telle sorte qu'il règle la puissance d'émission en fonction de l'information de régulation de puissance du récepteur (2),
le récepteur (2) étant conçu de telle sorte qu'il estime le comportement du canal de transmission en fonction du signal reçu, détermine la puissance d'émission nécessaire en fonction du résultat de l'estimation du comportement du canal de transmission et génère l'information de régulation de puissance (6) sur la base de la puissance d'émission nécessaire et déterminée et l'envoie à l'émetteur (1)
**caractérisé**
**en ce que** le récepteur (2) est conçu pour l'exécution du procédé selon l'une quelconque des revendications 1 à 9.

**11.** Système de téléphonie mobile selon la revendication 10,
**caractérisé**
**en ce que** le récepteur (2) génère l'information de régulation de puissance (6) sous la forme d'une instruction destinée à l'émetteur (1) pour le réglage de la puissance d'émission.

**12.** Système de téléphonie mobile selon la revendication 11,
**caractérisé**
**en ce que** le système de téléphonie mobile est un système de téléphonie mobile CDMA.

# FIG 1

Leistungsschätzung
( $\triangleq$ Kanalschätzung)

$P_n$

$P_{n-1}$

$P_{n-2}$

Zeit

4

| Schlitz#1 | Schlitz#n-2 | Schlitz#n-1 | Schlitz#n | Schlitz#16 |

3

| Rahmen #i |

# FIG 2

1

Downlink

2

Uplink

# FIG 3